# EUROPÄISCHE PATENTSCHRIFT

(11) **EP 3 489 394 B1**
(45) Veröffentlichungstag und Bekanntmachung des Hinweises auf die Patenterteilung: **19.08.2020**
(21) Anmeldenummer: 17203525.5
(22) Anmeldetag: 24.11.2017
(51) Int. Cl.: C25B 9/18, C25B 1/10, C25B 15/08

(54) **ELEKTROLYSEANLAGE ZUR NIEDERDRUCK-PEM-ELEKTROLYSE**
ELECTROLYZER FOR LOW PRESSURE PEM ELECTROLYSIS
ÉLECTROLYSEUR POUR ÉLECTROLYSE PEM À BASSE PRESSION

(43) Veröffentlichungstag der Anmeldung: 29.05.2019
(73) Patentinhaber: Siemens Aktiengesellschaft, 80333 München (DE)
(72) Erfinder: Wolf, Erik, 91341 Röttenbach (DE)

(56) Entgegenhaltungen:
- CH-A- 108 697
- KR-B1- 101 782 637
- US-A- 4 069 128

## Beschreibung

Die Erfindung betrifft eine Elektrolyseanlage zur Niederdruck-Protonen-Austausch-Elektrolyse, mit wenigstens zwei, jeweils zumindest eine Elektrolysezelle aufweisenden Elektrolysemodulen, welche jeweils zumindest eine Anschlussvorrichtung aufweisen, welche jeweils fluidisch leitend mit der jeweiligen zumindest einen Elektrolysezelle verbunden ist und über welche das jeweilige Elektrolysemodul mit einem zugeordneten Tank zum Speichern eines Fluids verbunden ist.

Bei einer Elektrolyse wird mittels elektrischen Stroms eine chemische Reaktion, insbesondere eine Redoxreaktion, angestoßen, wobei elektrische Energie in chemische Energie umgewandelt wird. Die dafür benötigte elektrische Energie liefert eine Gleichspannungsquelle, welche zwei elektrische Pole, eine Anode und eine Kathode, aufweist. Durch zwei Elektroden, die Anode und die Kathode, wird ein elektrischer Gleichstrom in einen leitenden Elektrolyten, beispielsweise eine leitende Flüssigkeit, geleitet. Bei einer Protonen-Austausch-Elektrolyse (PEM-Elektrolyse aus dem Englischen Proton Exchange Membrane Electrolysis) erfolgt die Leitung zumindest teilweise durch eine Protonen-Austausch-Membran, welche für positiv geladene Protonen durchlässig ist. An den Elektroden entstehen durch die Elektrolyse, das heißt durch Leiten des Gleichstroms der Gleichspannungsquelle, beispielsweise mittels Protonen, von der einen zur anderen Elektrode, Reaktionsprodukte der elektrochemischen Reaktion aus den im Elektrolyten beziehungsweise der Flüssigkeit enthaltenen Stoffen beziehungsweise Elementen.

Die Gleichspannungsquelle bewirkt einen Elektronenmangel in der mit dem Pluspol verbundenen Elektrode, der Anode, und einen Elektronenüberschuss in der mit dem Minuspol verbundenen Elektrode, der Kathode. An der Kathode nehmen elektroneutrale oder positiv geladene Stoffe Elektronen auf und werden dadurch reduziert. An der Anode erfolgt die Abgabe von Elektronen in die Elektrode beziehungsweise Anode, wobei der Stoff beziehungsweise die Stoffe dort oxidiert werden können.

Die KR 101 782 637 B1 zeigt eine Bipolarelektrodenanordnung, die eine quantitative Messung durch Visualisierung eines in einer Bipolarelektrode fließenden elektrischen Stroms ermöglicht, eine elektrochemische Zelle, die diese verwendet, und ein System zum Verwalten einer elektrochemischen Zelle.

Ferner zeigt die US 4 069 128 A eine Anodeneinheit für eine Diaphragmazelle vorgesehen, welche ein im Allgemeinen rechteckiges quaderförmiges Gerüst mit einem Paar beabstandeten, gitterartigen, strukturell starren peripheren Außenseitenwände, eine ionisch leitfähige, gasundurchlässige Membran, die an der Innenseite jeder dieser äußeren Umfangswände befestigt ist und eine Anode, die zwischen den Membranen dicht angeordnet ist, um ein Paar flüssigkeitsdichter Anodenabteile bereitzustellen, umfasst.

Eine häufige Form der Elektrolyse ist die Wasserelektrolyse, mittels welcher einer Zerlegung von Wasser in Wasserstoff und Sauerstoff stattfindet, wobei eine einfache Reaktionsgleichung 2H₂0 -> 2H₂ + O₂ lauten kann. Dies kann mittels Protonen-Austausch-Elektrolyse erfolgen, dabei wird Wasser in einer Elektrolysezelle mit einem festen Polymerelektrolyten gespaltet. Der Polymerelektrolyt, genauer eine PolymerElektrolyt-Membran beziehungsweise die Proton-Austausch-Membran, ist dabei für die Leitung von Protonen, den Wasserstoffionen, die Trennung von Produktgasen und die elektrische Isolierung der Elektroden verantwortlich. Als Produktgase entstehen bei der PEM-Elektrolyse molekularer Sauerstoff O₂ sowie molekularer Wasserstoff H₂ aus Wasser H₂O. Die PolymerElektrolyt-Membran weist aufgrund ihrer festen Struktur eine geringe Gasübertragungsrate auf, was zu einer sehr hohen Produktgasreinheit führt. Die Aufrechterhaltung einer hohen Gasreinheit ist wichtig für die Lagersicherheit und den direkten Einsatz des Produktgases beispielsweise in einer Brennstoffzelle.

Die Wasserelektrolyse mittels PEM-Elektrolyse ist beispielsweise aufgrund von dynamischen Reaktionszeiten und hohen Wirkungsgraden eine vielversprechende Technologie zur Energiespeicherung in Verbindung mit erneuerbaren Energiequellen. So kann sie beispielsweise bei den sogenannten Power-to-Gas-Konzepten die über dem Bedarf liegenden temporären Stromüberschüsse, beispielsweise bei der Produktion erneuerbarer Energie, die überschüssige Energie speichern. Eine Form der PEM-Elektrolyse ist die Niederdruck-PEM-Elektrolyse.

Der Erfindung liegt die Aufgabe zugrunde, für eine Niederdruck-Protonen-Austausch-Elektrolyse eine zumindest zwei Elektrolysemodule umfassende Elektrolyseanlage bereitzustellen, welche besonders effizient betrieben werden kann.

Diese Aufgabe wird durch eine Elektrolyseanlage mit den Merkmalen des Patentanspruchs 1 gelöst. Vorteilhafte Ausgestaltungen mit zweckmäßigen Weiterbildungen der Erfindung sind in den übrigen Ansprüchen angegeben.

Die erfindungsgemäße Elektrolyseanlage zur Niederdruck-PEM-Elektrolyse (Niederdruck-Protonen-Austausch-Elektrolyse ) umfasst wenigstens zwei, jeweils zumindest eine Elektrolysezelle aufweisende Elektrolysemodule, welche jeweils zumindest eine Anschlussvorrichtung aufweisen, welche jeweils fluidisch leitend mit der jeweiligen zumindest einen Elektrolysezelle verbunden ist und über welche das jeweilige Elektrolysemodul mit einem zugeordneten Tank zum Speichern eines Fluids verbunden ist. Um nun die Elektrolyseanlage besonders effizient betreiben zu können und darüber hinaus einen besonders einfachen Aufbau der Elektrolyseanlage realisieren zu können, ist es erfindungsgemäß vorgesehen, dass die Anschlussvorrichtungen der wenigstens zwei Elektrolysemodule mit einem gemeinsamen Kanalelement verbunden sind, über welches die Elektrolysemodule mit dem zugehörigen Tank verbunden sind.

Mit anderen Worten werden die wenigstens zwei Elektrolysemodule mittels des Kanalelements fluidisch leitend zusammengeschlossen. Das Kanalelement ist zudem fluidisch leitend mit dem zugehörigen Tank verbunden, sodass das jeweilige Elektrolysemodul über seine Anschlussvorrichtung in fluidischen Kontakt mit dem jeweils anderen Elektrolysemodul und dem Tank steht. Das jeweilige Elektrolysemodul umfasst zumindest eine Elektrolysezelle, welche dazu ausgebildet ist, eine Elektrolyse, das heißt eine Redoxreaktion mittels elektrischen Stroms an beispielsweise einem ersten Fluid durchzuführen. Dazu weist die jeweilige Elektrolysezelle zumindest eine Kammer mit einer Protonen-Austausch-Membran auf, welche die Kammer in zwei Teilbereiche trennt, wobei ein jeweiliger Teilbereich eine Elektrode aufweist. Dabei sind die Teilbereiche derart voneinander getrennt, dass ein Teilchenaustausch zwischen den Teilbereichen nur mittels der Protonen-Austausch-Membran stattfinden kann. Das Fluid kann beispielsweise Moleküle umfassen, welche durch die Elektrolyse aufgespalten werden sollen. Bei der Elektrolyse entsteht, insbesondere an der jeweiligen Elektrode, im jeweiligen Teilbereich zumindest ein Fluid, insbesondere ein sogenanntes Produktgas, welches ein weiteres Beispiel für das Fluid ist. Dabei ist jeweils ein Pol einer Gleichspannungsquelle mit jeweils einer der Elektroden verbunden. Eine der Elektroden ist die sogenannte Anode, welche sich als Elektronenakzeptor beziehungsweise wie ein Oxidationsmittel verhält. Die andere Elektrode ist die sogenannte Kathode, welche sich als Elektronendonator beziehungsweise wie ein Reduktionsmittel verhält.

Die jeweilige zumindest eine Anschlussvorrichtung ist, beispielsweise derart angeordnet, dass sie an dem jeweiligen Teilbereich der Elektrolysezelle das Fluid, beispielsweise das Produktgas, aus dem Teilbereich ausleiten beziehungsweise ausfördern kann. Alternativ oder zusätzlich kann die Anschlussvorrichtung derart an einem Teilbereich angeordnet sein, dass sie Fluid, beispielsweise Wasser, welches für die Elektrolyse verwendet wird, in die jeweilige Elektrolysezelle, insbesondere einen der Teilbereiche einleiten beziehungsweise fördern kann. Sind mehrere Elektrolysezellen zu einem Elektrolysemodul zusammengefasst, kann die jeweilige Anschlussvorrichtung derart ausgebildet sein, dass sie beispielsweise die jeweiligen Teilbereiche, welche als Elektrode die Anode aufweisen, gemeinsam mit dem Fluid versorgen kann beziehungsweise das Fluid über die Anschlussvorrichtung in die Teilbereiche einleitbar ist. Analog kann dies auch für die Anschlussvorrichtung gelten, welche die Teilbereiche, welche die Kathode aufweisen, verbindet. Die Anschlussvorrichtung, welche dazu ausgebildet ist, Produktgas aus einem Teilbereich zu entfernen beziehungsweise auszuleiten, kann ebenfalls derart ausgebildet sein, dass sie jeweilige Teilbereiche mehrerer Elektrolysezellen eines Elektrolysemoduls verbindet. Durch das erfindungsgemäße Kanalelement können die Anschlussvorrichtungen in besonders einfacher und somit effizienter Weise miteinander und mit einem Tank verbunden werden. Dadurch ergibt sich für die erfindungsgemäße Elektrolyseanlage zumindest der Vorteil, dass für mindestens zwei Elektrolysemodule eine Reduzierung von Schnittstellen erreicht wird, was zu einer Systemvereinfachung und einer Effizienzsteigerung führt. Das gemeinsame Kanalelement kann eine Schnittstelle für eine Vielzahl von Elektrolysemodulen ausbilden.

Erfindungsgemäß weist das Kanalelement eine Neigung auf, mittels welcher dem Fluid eine bevorzugte Flussrichtung in dem Kanalelement vorgebbar ist. Mit anderen Worten weißt das Kanalelement eine Neigung zum Vorgeben einer Flussrichtung für das Fluid auf. Das heißt, durch die Neigung des Kanalelements kann zumindest teilweise die Richtung, in welche das Fluid fließt, beeinflusst werden. So fließt Wasser von einem, insbesondere in Relation zu einem Schwerefeld, höheren Teilstück des Kanalelements zu einem in dem Schwerefeld tiefer liegenden Teilstück des Kanalelements, insbesondere sofern zwischen diesen beiden Teilbereichen des Kanalelements kein noch höher liegendes als das höher liegende Teilstück beziehungsweise tiefer liegendes als das tief liegende Teilstück ausgebildet ist. Das Schwerkraftfeld ist in der Regel die Erdanziehung. Durch die Neigung des Kanalelements ist es besonders einfach und somit effizient, dem Fluid eine, insbesondere vorteilhafte, Flussrichtung vorzugeben.

Erfindungsgemäß weist das Kanalelement eine Entnahmevorrichtung zum Ausleiten des Fluids aus der Elektrolyseanlage auf. Mit anderen Worten kann mittels der Entnahmevorrichtung das Fluid aus dem Kanalelement entfernt werden, sodass beispielsweise der Tank nicht mit dem Volumen des Fluids beaufschlagt wird. Dadurch ist es beispielsweise auf besonders effiziente Weise möglich, kondensiertes Wasser und/oder Kühlwasser vom Prozessgas zu separieren. Bei der Niederdruck-PEM-Elektrolyse können beispielsweise während der Elektrolyse Temperaturen von über 20 Grad Celsius auftreten, daher kann das Wasser, welches durch die Elektrolyse gespalten werden soll, gleichzeitig als Kühlmittel verwendet werden. Dieses Wasser kann an der, insbesondere austrittsseitigen, Anschlussvorrichtung aus dem jeweiligen Elektrolysemodul heraus gefördert beziehungsweise gezogen werden. Wasser, welches aus dem Elektrolysemodul ausgefördert ist, und in dem ansonsten mit Prozessgas gefüllten Kanalelement angeordnet ist, kann über die Entnahmevorrichtung besonders effizient entfernt werden.

Erfindungsgemäß weist das Kanalelement eine Entlüftungsvorrichtung auf, mittels welcher das Kanalelement an seinem höchsten Punkt in Bezug zu einem Schwerkraftfeld fluidisch mit einer Umgebung koppelbar ist. Mit anderen Worten kann mittels der Entlüftungsvorrichtung das Kanalelement entlüftet werden, und zwar derart, dass insbesondere das Prozessgas Wasserstoff, welches leichter als Luft ist, dank der Position der Entlüftungsvorrichtung vollständig aus dem Kanalelement entfernbar ist beziehungsweise entfernt werden kann. Ferner erlaubt es die Entlüftungsvorrichtung beim Befüllen des Kanalelements mit einem flüssigen Fluid, insbesondere Wasser, das eingeschlossene Gas, insbesondere das Produktgas, aus der Elektrolyseanlage entweichen zu lassen. So kann beispielsweise eine Inertisierung der fluidisch leitend mit dem Kanalelement verbunden Bauteile wie beispielsweise das jeweilige Elektrolysemodul mittels Wasser erfolgen. Durch die Verwendung von Wasser bei der Inertisierung kann beispielsweise auf N₂ oder CO₂ als Intergase verzichtet oder zumindest deren Verbrauch reduziert werden, sodass Kosten eingespart werden können. Somit ist mittels der Entlüftungsvorrichtung ein besonders effizienter Betrieb der Elektrolyseanlage möglich.

Der Erfindung liegt die Erkenntnis zugrunde, dass bei der Niederdruck-PEM-Elektrolyse mittels der Anschlussvorrichtung nur eine begrenzte Anzahl von Elektrolysezellen zu einem Elektrolysemodul zusammengefasst werden kann. Dabei erzeugt das Prozessgas, welches an einer der Elektroden entsteht, beispielsweise einen Gasstrom, wenn es die zumindest eine jeweilige Elektrolysezelle des jeweiligen Elektrolysemoduls über die zumindest eine Anschlussvorrichtung verlässt. Mittels des Gasstroms kann beispielsweise bei einer weiteren Anschlussvorrichtung ein Einströmen eines weiteren Fluids, beispielsweise das für den Elektrolyseprozess verwendete Wasser, stattfinden. Die dabei erzeugte Strömung, insbesondere der Gasstrom, beziehungsweise das Strömungsfeld ist der limitierende Faktor für die Anzahl der Elektrolysezellen im jeweiligen Elektrolysemodul. Durch das Kanalelement kann quasi eine beliebige Anzahl an Elektrolysemodule mit einem Tank verbunden werden, wodurch der genannte limitierende Faktor entfallen kann.

In vorteilhafter Ausgestaltung der Erfindung ist das Kanalelement mit einem einzigen Tank zum Speichern des Fluids verbunden. Das heißt, ein einziger Tank genügt, um ein Fluid, welches beispielsweise Moleküle für die chemische Spaltung bereithält und/oder das jeweilige Produktgas, welches an der Anode und/oder Kathode entsteht, für die zumindest zwei Elektrolysemodule bereitzuhalten beziehungsweise von diesen aufzunehmen. Der Tank kann beispielsweise auch als Zwischenspeicher dienen, welcher beispielsweise das Produktgas vor einer Weiterverarbeitung, wie beispielsweise eine Methanisierung zwischenspeichern kann. Durch die Verwendung eines einzigen Tanks ergibt sich der Vorteil, dass nicht mehrere Tanks pro Fluid, insbesondere einer und pro Elektrolysemodul, bereitgehalten werden müssen, wodurch die Elektrolyseanlage besonders effizient ausgebildet werden kann. Als Tank im Sinne der Erfindung kann sowohl ein Tank als auch ein Reservoir verstanden werden. Dabei bedeutet Reservoir ein Speicher mit quasi beliebiger Kapazität. Das heißt, als Tank im Sinne der Erfindung kann beispielsweise auch ein Anschluss an eine Leitung, wie eine Wasserleitung, angesehen werden, mittels welcher es möglich ist, eine beliebige Menge Fluid für die Elektrolyse bereitzustellen. Alternativ dazu kann auch eine Ableitung des Produktgases beispielsweise in ein Leitungssystem für eine anschließende Methanisierung als Reservoir und somit als ein Tank angesehen werden.

Das Fluid ist vorteilhafterweise Wasser und/oder Sauerstoff und/oder Wasserstoff. Die PEM-Elektrolyse, insbesondere die Niederdruck-PEM-Elektrolyse, ist aufgrund ihrer für Protonen durchlässigen Protonen-Austausch-Membran, für die chemische Spaltung von Wasser in Sauerstoff und Wasserstoff geeignet. Dabei entsteht aus Wasser, welches der jeweiligen Elektrolysezelle insbesondere als flüssiges Fluid zugeführt wird, in einem der Teilbereich der Elektrolysezelle als Produktgas, insbesondere molekularer, Sauerstoff und in dem anderen der Teilbereiche als Produktgas, insbesondere molekularer, Wasserstoff. Mit Wasser ist die Niederdruck-PEM-Elektrolyse mittels der erfindungsgemäßen Elektrolyseanlage besonders effizient durchzuführen, wobei als Produktgase Sauerstoff und Wasserstoff entstehen. Daraus ergibt sich ferner, dass der Tank für die Speicherung von Wasser und/oder Wasserstoff und/oder Sauerstoff ausgebildet sein kann beziehungsweise ist.

In vorteilhafter Ausgestaltung der Erfindung ist das Kanalelement derart angeordnet, dass das Fluid aus dem Tank über das Kanalelement und die zumindest eine jeweilige Anschlussvorrichtung in das jeweilige Elektrolysemodul förderbar ist. Mit anderen Worten kann ein Fluid, welches insbesondere in dem Tank für die Elektrolyse vorgehalten ist, über das Kanalelement mittels der jeweiligen Anschlussvorrichtung in das jeweilige Elektrolysemodul strömen beziehungsweise einleitbar sein. Die Anschlusseinrichtung ist als Eintrittsanschlusseinrichtung ausgebildet, mittels welcher beispielsweise Wasser in das Elektrolysemodul einleitbar ist. Dadurch ergibt sich der Vorteil, dass in besonders effizienter Weise das Fluid aus dem Tank in die zumindest zwei Elektrolysemodule förderbar ist beziehungsweise gefördert beziehungsweise geleitet werden kann.

In vorteilhafter Ausgestaltung der Erfindung ist das Kanalelement derart angeordnet, dass das Fluid aus dem jeweiligen Elektrolysemodul über die zumindest eine jeweilige Anschlussvorrichtung und das Kanalelement in den Tank förderbar ist. Mit anderen Worten kann das Fluid, insbesondere das Produktgas wie beispielsweise Wasserstoff, welches über die jeweilige Anschlussvorrichtung eines jeweiligen Elektrolysemoduls in das Kanalelement einleitbar ist, zu dem Tank strömen beziehungsweise transportiert beziehungsweise gefördert werden. Die Anschlusseinrichtung kann dabei als Austrittsanschlusseinrichtung ausgebildet sein, welche beispielsweise dem molekularen Wasserstoff zugeordnet ist und diesen aus dem Elektrolysemodul leiten kann. Dadurch ergibt sich eine besonders effiziente Förderung von als Prozessgas vorliegendem Fluid in den Tank.

In vorteilhafter Ausgestaltung der Erfindung weist die Elektrolyseanlage zumindest eine Füllstandskontrollvorrichtung auf, mittels welcher die Menge des Fluids in wenigstens einer der zumindest einen Elektrolysezellen zumindest eines Elektrolysemoduls bestimmbar ist. Mit anderen Worten kann mittels der Füllstandskontrollvorrichtung der Füllstand des Fluids in der Elektrolysezelle kontrolliert werden, wodurch in Abhängigkeit des Füllstands beispielsweise veranlasst werden kann, weiteres Fluid aus dem Tank über das Kanalelement in die wenigstens eine Elektrolysezelle des jeweiligen Elektrolysemoduls zu fördern. Dadurch ist ein besonders effizienter Betrieb der Elektrolyseanlage möglich.

In vorteilhafter Ausgestaltung der Erfindung sind die Elektrolysemodule über jeweils wenigstens eine weitere Anschlusseinrichtung mittels zumindest eines weiteren gemeinsamen Kanalelements mit einem weiteren Tank verbunden. Dabei kann die jeweilige weitere Anschlusseinrichtung mit den Merkmalen der zumindest einen Anschlusseinrichtung und/oder das weitere Kanalelement mit den Merkmalen des Kanalelements und/oder der weitere Tank mit den Merkmalen des Tanks ausgebildet sein. Mit anderen Worten ist es mittels der weiteren Anschlussrichtung, des weiteren Kanalelements und des weiteren Tanks möglich, dass beispielsweise die zumindest eine jeweilige Anschlusseinrichtung als austrittsseitige Anschlusseinrichtung ausgebildet ist und die jeweils weitere Anschlusseinrichtung als eintrittsseitige Anschlusseinrichtung ausgebildet ist. Dabei ist das Kanalelement beispielsweise derart ausgebildet, das Fluid, insbesondere Wasser, von dem Tank in die jeweiligen Elektrolysemodule zu fördern. Das weitere Kanalelement ist dazu ausgebildet, das Fluid, insbesondere das jeweilige Prozessgas, aus dem Elektrolysemodul in den weiteren Tank zu befördern. Dadurch kann eine weitere Systemvereinfachung und somit Effizienzsteigerung der Elektrolyseanlage realisierbar sein.

In vorteilhafter Ausgestaltung der Erfindung ist das weitere Kanalelement gegenüber dem Kanalelement in Bezug auf das Schwerkraftfeld in einer anderen Höhe angeordnet. Mit anderen Worten ist ein Kanalelement derart angeordnet, dass es im Vergleich zu dem weiteren Kanalelement auf einem anderen Höhenniveau liegt, wodurch beispielsweise das eine Kanalelement besonders vorteilhaft zum Leiten des jeweiligen Prozessgases und das weitere Kanalelement zum Leiten des Wassers verwendet werden kann. Dabei kann das Kanalelement und/oder das weitere Kanalelement dazu ausgebildet sein sowohl das Wasser als auch das Prozessgas besonders vorteilhaft zu leiten. Somit kann beispielsweise das Kanalelement zum Fördern des Fluids, insbesondere des Wasser, aus dem Kanalelement in das jeweilige Elektrolysemodul verwendet werden. Das weitere Kanalelement kann, insbesondere Aufgrund seiner unterschiedlichen Höhe zum Kanalelement, zum Fördern des Fluids, insbesondere von Wasserstoff beziehungsweise Sauerstoff aus dem jeweiligen Elektrolysemodul in das weitere Kanalelement dienen. In diesem Fall ist das Kanalelement unterhalb beziehungsweise tieferliegend zum weiteren Kanalelement angeordnet. Ferner können dadurch je Kanalelement und weiterem Kanalelement, insbesondere unterschiedliche, Gasströme einstellbar sein, mittels welchen beispielsweise Fluid in die jeweilige Elektrolysezelle, insbesondere in den jeweiligen Teilbereich, förderbar ist.

In vorteilhafter Ausgestaltung der Erfindung sind dem Elektrolysemodul eine Regelungseinrichtung und der Anschlusseinrichtung eine Messeinrichtung zugeordnet, wobei ein Fluidstrom des Fluids durch die Anschlusseinrichtung mittels der Reglungseinrichtung in Abhängigkeit wenigstens eines von der Messeinrichtung erfassten Messwerts veränderbar, insbesondere regelbar oder steuerbar, ist beziehungsweise verändert wird. Mit anderen Worten bestimmt die Messeinrichtung den wenigstens einen Messwert wenigstens einer Messgröße, welche das Fluid und/oder eine Produktionsrate des Fluids beziehungsweise des Produktgases charakterisiert. Dabei kann die Messgröße beispielsweise eine Temperatur des Fluids bei seinem Austreten beziehungsweise Ausströmen aus dem Elektrolysemodul in der Anschlussvorrichtung sein. Zusätzlich oder alternativ kann die Messgröße beispielsweise ein Druck des Fluids und/oder ein Differenzdruck und/oder eine Durchflussrate sein, wobei jede einzelne dieser Messgrößen das Fluid beziehungsweise dessen Produktionsrate in der Elektrolysezelle beziehungsweise dem Elektrolysemodul charakterisieren kann. Ist die Messgröße die Temperatur, ist, in Abhängigkeit des gemessenen Temperaturwerts, die Menge des Fluids, welches in das oder aus dem Elektrolysemodul gefördert wird, mittels der Regelungseinrichtung einstellbar beziehungsweise regelbar, beziehungsweise wird die Menge eingestellt oder geregelt. Das flüssige Fluid, insbesondere Wasser, dient während der Niederdruck-PEM-Elektrolyse als Kühlmittel für die jeweilige Elektrolysezelle beziehungsweise das Elektrolysemodul. Durch Alterungsprozesse kann sich ein ohmscher Widerstand innerhalb der Elektrolysezelle ändern, insbesondere erhöhen. Mit der Änderung des ohmschen Widerstands können eine Temperaturänderung und eine Änderung einer Produktionsrate des Produktgases einhergehen. Die Änderung der Produktionsrate kann sich wiederum auf den Druck und/oder die Durchflussrate des Fluid auswirken. Durch die erfindungsgemäße Reglungseinrichtung kann nun die Menge des Fluids derart beeinflusst werden, dass beispielsweise der Temperaturänderung und/oder der Änderung der Produktionsrate entgegengewirkt werden kann.

In vorteilhafter Ausgestaltung der Erfindung sind die zumindest zwei Elektrolysemodule bezüglich ihrer Höhenrichtung in einer dazu senkrechten ersten Richtung und/oder in einer zur Höhenrichtung und zur ersten Richtung senkrechten zweiten Richtung angeordnet. Mit anderen Worten sind die Elektrolysemodule besonders platzsparend angeordnet beziehungsweise anordenbar. Bei mehr als zwei Elektrolysemodulen können die Elektrolysemodule somit in zumindest zwei Reihen nebeneinander angeordnet werden, wodurch sich das Kanalelement beispielswiese derart anordnen lässt, dass dieses besonders kurz ausgebildet werden kann, wodurch Material und somit Kosten gespart werden können.

Weitere Vorteile, Merkmale und Einzelheiten der Erfindung ergeben sich aus der nachfolgenden Beschreibung eines bevorzugten Ausführungsbeispiels sowie anhand der Zeichnungen.

### Dabei zeigt:

- FIG 1: ein einzelnes Elektrolysemodul einer Elektrolyseanlage zur Niederdruck-Protonen-Austausch-Elektrolyse mit einer Anschlusseinrichtung für das Prozessgas Wasserstoff sowie einer Anschlusseinrichtung für das Prozessgas Sauerastoff;
- FIG 2: in einer schematischen Perspektivansicht eine erfindungsgemäße Elektrolyseanlage mit zumindest zwei Elektrolysemodulen, welche jeweils mit einer Anschlussvorrichtung für Wasserstoff als Prozessgas sowie jeweils einer Anschlussvorrichtung für Sauerstoff als Prozessgas fluidisch leitend mit jeweils einem gemeinsamen Kanalelement verbunden sind;
- FIG 3: die Elektrolyseanlage gemäß FIG 2 in einer Seitenansicht mit einer Mehrzahl von Elektrolysemodulen gemäß FIG 1, welche mittels des erfindungsgemäßen Kanalelements verbunden sind;
- FIG 4: eine zweite Ausführungsform der Elektrolyseanlage in einer schematischen Perspektivansicht mit einer Mehrzahl von Elektrolysemodulen, welche mittels jeweils eines Anschlusselements an einer Wasserstoffseite und einer Sauerstoffseite fluidisch leitend verbunden über ein jeweiliges Kanalelement verbunden sind;
- FIG 5: eine Seitenansicht der Ausführungsform der Elektrolyseanlage gemäß FIG 4;
- FIG 6: eine Seitenansicht einer dritten Ausführungsform der Elektrolyseanlage mit einem Kanalelement und einem in einer anderen Höhe angeordneten weiteren Kanalelement; und
- FIG 7: eine schematische Perspektivansicht einer vierten Ausführungsform der Elektrolyseanlage, wobei die Elektrolysemodule nebeneinander und hintereinander angeordnet sind.

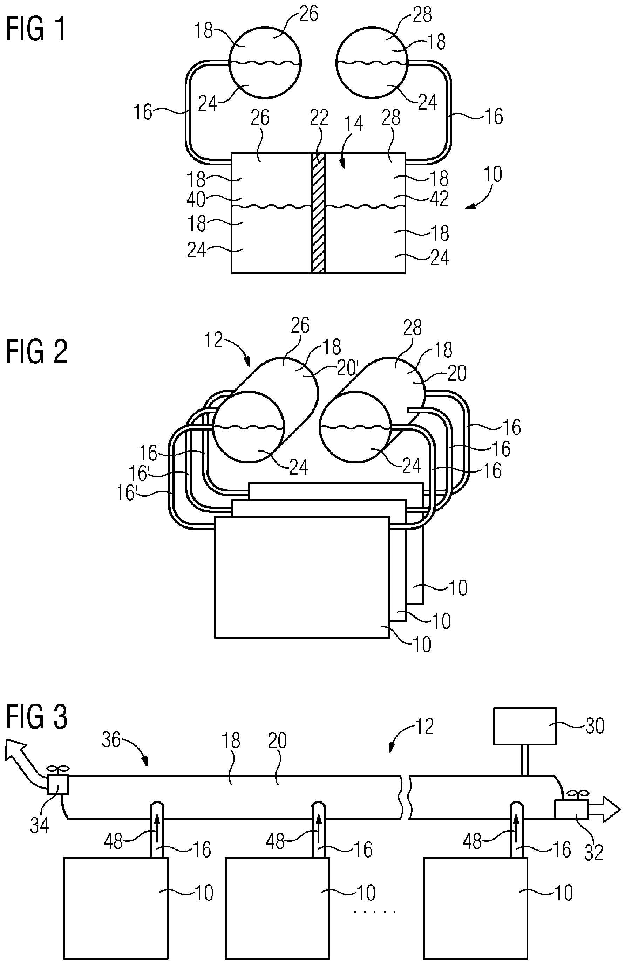

FIG 1 zeigt ein einzelnes Elektrolysemodule 10 der Elektrolyseanlage 12 zur Niederdruck-Protonen-Austausch-Elektrolyse (Niederdruck-PEM-Elektrolyse), welches in den nachfolgenden Ausführungsformen verwendet wird. Das Elektrolysemodul 10 weist zumindest eine Elektrolysezelle 14 und zumindest eine Anschlussvorrichtung 16 auf. Die jeweilige Anschlussvorrichtung 16 ist fluidisch leitend mit der jeweiligen zumindest einen Elektrolysezelle 14 verbunden. Ferner ist das jeweilige Elektrolysemodul 10 mittels der zumindest einen jeweiligen Anschlussvorrichtung 16 mit einem zugeordneten Tank 30 (vergleiche FIG 3) zum Speichern eines Fluids 18 verbunden. Um nun die Elektrolyseanlage 12 besonders vorteilhaft und somit insbesondere effizient betreiben zu können, sind, wie in den nachfolgenden Figuren (FIG 2 bis FIG 7) gezeigt, die jeweiligen Anschlussvorrichtungen 16 von wenigstens zwei Elektrolysemodulen 10 mit einem gemeinsamen Kanalelement 20 (vergleiche FIG 2 bis FIG 7) verbunden, wobei über das Kanalelement 20 die Elektrolysemodule 10 mit dem zugehörigen Tank 30 verbunden sind.

Bei der in den Ausführungsbeispielen gezeigten mindestens einen Elektrolysezelle 14 des Elektrolysemoduls 10 handelt es sich um eine sogenannte Protonen-Austausch-Elektrolysezelle, welche eine Protonen-Austausch-Membran 22 aufweist. Die Protonen-Austausch-Membran 22 trennt die Elektrolysezelle 14 in einen ersten Teilbereich 40 und einen zweiten Teilbereich 42. Als Fluid 18 für die Elektrolyse wird Wasser 24 eingesetzt, welches während des Elektrolysevorgangs mittels elektrischer Energie in das Fluid 18 Wasserstoff 26 und in das Fluid 18 Sauerstoff 28 chemisch zersetzt wird. Das ist der Wasserstoff 26 ein Produktgas beziehungsweise Prozessgas. Der Sauerstoff 28 kann ebenfalls als Produkt- beziehungsweise Prozessgas bezeichnet werden. Das heißt, das Fluid 18 kann Wasser 24 und/oder Wasserstoff 26 und/oder Sauerstoff 28 sein. Dabei entsteht Wasserstoff 26 in dem ersten Teilbereich 40 und Sauerstoff 28 in dem zweiten Teilbereich 42.

In den folgenden Figuren (FIG 2 bis FIG 7) ist das jeweilige Elektrolysemodul 10 vereinfacht beziehungsweise schematisch dargestellt, das heißt die zumindest eine Elektrolysezelle 14 mit Protonen-Austausch-Membran 22 und den Teilbereichen 40 und 42 ist nicht gezeigt.

FIG 2 zeigt eine perspektivische Schrägansicht der Elektrolyseanlage 12 mit mehreren bezüglich der Bildebene hintereinander angeordneten Elektrolysemodulen 10, welche jeweils eine Anschlussvorrichtung 16 zum Ausleiten von Wasserstoff 26 sowie jeweils eine weitere Anschlussvorrichtung 16' zum Ausleiten von Sauerstoff 28 umfassen. Somit weist das jeweilige Elektrolysemodul 10 jeweils wenigstens eine weitere Anschlussvorrichtung 16' auf, mittels welcher jeweils ein weiteres Kanalelement 20' mit einem weiteren in der FIG 2 nicht gezeigten Tank 30' verbunden sind. Dabei ist eine Unterscheidung zwischen der Anschlussvorrichtung 16 und der weiteren Anschlussvorrichtung 16', dass die Erstgenannte zum Ausleiten des Wasserstoffs 26 dient und die Zweitgenannte zum Ausleiten des Sauerstoffs 28 dient. Entsprechendes gilt für das weiter Kanalelement 20' im Vergleich zum Kanalelement 20 sowie für den Tank 30 im Vergleich zu dem weiteren Tank 30'. Das Kanalelement 20, 20' weist eine Neigung auf, mittels welcher dem Fluid 18, insbesondere dem Wasserstoff 26 beziehungsweise dem Sauerstoff 28, sowie dem in dem jeweiligen Kanalelement 20, 20' eingelagerten Wasser 24 eine bevorzugte Flussrichtung in dem jeweiligen Kanalelement 20, 20' vorgebbar ist. Dadurch kann ein besonders einfacher Transport des jeweiligen Fluids 18 (24, 26, 28) aus dem Tank 30, 30' in das Elektrolysemodul 10 beziehungsweise aus dem Elektrolysemodul 10 in den Tank 30, 30' realisiert werden.

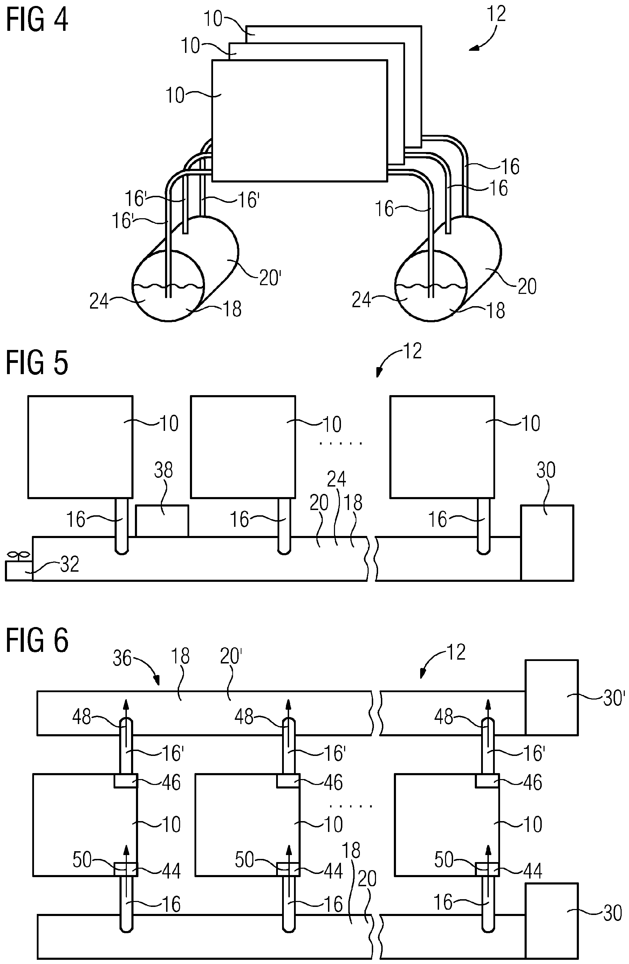

FIG 3 zeigt die Elektrolyseanlage 12 gemäß FIG 2 in einer Seitenansicht. Dabei ist das Kanalelement 20 mit dem einzigen, ihm zugeordneten Tank 30 verbunden. Somit wird durch das Kanalelement 20, welches die einzelnen Anschlussvorrichtungen 16 der jeweiligen Elektrolysemodule 10 fluidisch leitend miteinander verbindet, ermöglicht, dass für eine Speicherung des Fluids 18 (24, 26, 28) nur ein einzelner Tank 30 bereitzustellen ist. In den Ausführungsformen der FIG 4 und 5 wird ebenfalls nur jeweils ein einziger Tank 30 benötigt. Somit kann die Elektrolyseanlage 12 besonders effizient ausgebildet sein und/oder betrieben werden, da nicht mehrere Tanks 30 zum Speichern des Fluids 18 vorgehalten werden müssen. Das Kanalelement 20 ist derart angeordnet, dass das Fluid 18 aus dem jeweiligen Elektrolysemodul 10 über die zumindest eine jeweilige Anschlussvorrichtung 16 und das Kanalelement 20 in den Tank 30 förderbar ist. In der FIG 3 ist angedeutet, dass quasi eine beliebige Anzahl von Elektrolysemodulen 10 mittels des Kanalelements 20 untereinander sowie mit dem Tank 30 verbunden werden kann.

Das Kanalelement 20 weist eine Entnahmevorrichtung 32 auf, welche zum Ausleiten des Fluids 18, insbesondere von Wasser 24, aus der Elektrolyseanlage 12 dient. Während der Niederdruck-Protonen-Austausch-Elektrolyse können in der Elektrolyseanlage 12 beispielsweise Temperaturen von über 20 Grad auftreten. Das dabei erzeugte Produktgas beziehungsweise die Produktgase kann beziehungsweise können als Fluid 18 (Wasserstoff 26 beziehungsweise Sauerstoff 28), insbesondere durch ein Entweichen über die Anschlussvorrichtung 16 einen Gasstrom 48 in der Elektrolysezelle 14 erzeugen, mittels welchem Wasser 24 aus der jeweilige Elektrolysezelle 14 beziehungsweise dem die Elektrolysezelle 14 aufweisenden Elektrolysemodul 10 transportierbar beziehungsweise förderbar ist. Dadurch kann die Niederdruck-PEM-Elektrolyse quasi kontinuierlich betrieben werden. Das Wasser 24 dient bei der Niederdruck-PEM-Elektrolyse als Kühlmittel für die jeweilige Elektrolysezelle und wird, insbesondere durch den Gasstrom 48, zumindest teilweise aus der jeweiligen Elektrolysezelle 14 in das Kanalelement 20, 20' gefördert, wodurch sich ebenfalls Wasser im Kanalelement 20, 20' sammeln kann. Das Wasser 24 kann besonders einfach mittels der Entnahmevorrichtung 32 ausgeleitet werden. Dadurch kann beispielsweise eine besonders hohe Gasreinheit des Prozessgases, also des Wasserstoffs 26 beziehungsweise des Sauerstoffs 28, erzielt werden, wodurch die Elektrolyseanlage 12 besonders effizient betreibbar ist. Das ausgeleitet Wasser 24, wird aus der Elektrolyseanlage 12 entfernt und kann gesammelt werden. Nach einer erfolgten Konditionierung kann dieses dann aufbereitet Wasser 24, insbesondere über den Tank 30 (gemäß FIG 4 bis FIG 6), der Elektrolyseanlage 12 bereitgestellt werden.

Ferner weist das Kanalelement 20 eine Entlüftungsvorrichtung 34 auf, mittels welcher das Kanalelement 20 an seinem höchsten Punkt in Bezug zu einem Schwerkraftfeld beziehungsweise der Erdanziehung fluidisch mit einer Umgebung 36 koppelbar ist. Mittels der Entlüftungsvorrichtung 34 kann beispielsweise Fremdgas besonders vorteilhaft aus der Elektrolyseanlage 12 entfernt werden.

FIG 4 zeigt die Elektrolyseanlage 12 in einer zweiten Ausführungsform in einer schematischen Perspektivansicht, wobei die Elektrolysemodule 10 in Bezug zur Bildebene hintereinander angeordnet sind. Die Anschlussvorrichtungen 16, 16' dienen in der gezeigten Ausführungsform zum Versorgen des jeweiligen Elektrolysemoduls 10 mit Wasser 24 als Fluid 18. Dabei dienen die Anschlussvorrichtungen 16' zum Versorgen des (nicht gezeigten) ersten Teilbereichs 40 der Elektrolysezelle 14, in welchem der Wasserstoff 26 gebildet wird. Dabei sind die Anschlussvorrichtungen 16' mit einem Kanalelement 20' verbunden. Die Anschlussvorrichtungen 16 dienen zum Versorgen des Teilbereichs 42 der jeweiligen Elektrolysezelle 14 der Elektrolysemodule 10, in welchem Sauerstoff 28 als Fluid 18 beziehungsweise Produktgas produziert wird, wobei die jeweilige Anschlussvorrichtung 16 mit dem Kanalelement 20 verbunden ist. Das Kanalelement 20 beziehungsweise 20' ist derart angeordnet, dass das Fluid 18, insbesondere Wasser 24, aus dem (hier nicht gezeigten) Tank 30 beziehungsweise 30' über das Kanalelement 20 beziehungsweise 20' über die zumindest eine jeweilige Anschlussvorrichtung 16 beziehungsweise 16' in das jeweilige Elektrolysemodul 10 förderbar ist. Dabei fließt das Wasser 24 von unten (in Bezug zur Orientierung der Figuren und der Erde) aus dem Kanalelement 20, 20' in das jeweilige Elektrolysemodul 10. Dabei wird das Wasser 24 zumindest teilweise durch den Gasstrom, welchen das Fluid 18 (Wasserstoff 26 und/oder Sauerstoff 28) beim Ausströmen aus dem jeweiligen Elektrolysemodul 10, insbesondere dem jeweiligen Teilbereich 40 und/oder 42, erzeugt, gefördert. Das Kanalelement 20, 20' ist zumindest teilweise, insbesondere vollständig, mit dem flüssigen Fluid 18 (Wasser 24) befüllt. Vor dem ersten Befüllen des Kanalelements 20, 20' kann sich Gas in dem Kanalelement 20, 20' befinden.

FIG 5 zeigt die Elektrolyseanlage 12 gemäß FIG 4 in einer Seitenansicht, wobei hier wieder zu erkennen ist, dass quasi eine beliebige Anzahl von Elektrolysemodulen 10 an dem Kanalelement 20 anordenbar sind, um Wasser 24 beziehungsweise Fluid 18 aus dem Tank 30 in die jeweiligen Elektrolysemodule 10 zu fördern. Dabei kann der Tank 30 ein quasi beliebig großes Reservoir sein, was beispielsweise auch ein Anschluss an eine Wasserleitung sein kann. Die Elektrolyseanlage 12 weist eine Füllstandskontrollvorrichtung 38 auf, mittels welcher die Menge des Fluids 18 in wenigstens einer der zumindest einen Elektrolysezelle 14 zumindest eines Elektrolysemoduls 10 bestimmbar ist. Dadurch ist eine Überwachung des Niederdruck-PEM-Elektrolyseprozesses auf besonders vorteilhafte Weise möglich, wodurch beispielsweise ein Leerlauf in der zumindest einen Elektrolysezelle 14 eines der zumindest zwei Elektrolysemodulen 10 vermieden werden kann.

FIG 6 zeigt eine Seitenansicht einer dritten Ausführungsform der Elektrolyseanlage 12 mit einem Kanalelement 20 und einem in Bezug auf das Schwerkraftfeld, also relativ zur Erdanziehung, anderen Höhe angeordneten weiteren Kanalelement 20'. Somit kann das Kanalelement 20 zum Fördern des Fluids 18, insbesondere des Wasser 24, aus dem Kanalelement 20 in das jeweilige Elektrolysemodul 10 verwendet werden. Das weitere Kanalelement 20' kann, insbesondere aufgrund seiner unterschiedlichen Höhe zum Kanalelement 20, zum Fördern des Fluids 18, insbesondere von Wasserstoff 26 beziehungsweise Sauerstoff 28 aus dem jeweiligen Elektrolysemodul 10 in das weitere Kanalelement 20' dienen.

Ferner zeigt die FIG 6 eine jeweilige Regelungseinrichtung 44, welche dem jeweiligen Elektrolysemodul 10 zugeordnet ist und eine der jeweiligen Anschlusseinrichtung 16' zugeordnete jeweilige Messeinrichtung 46. Die Messeinrichtung 46 ist in der gezeigten Ausführungsform als Temperaturmesseinrichtung ausgebildet und nimmt als Messwert beziehungsweise Messwerte Temperaturwerte der Messgröße Temperatur auf. Die Messeinrichtung misst die Temperatur des über die Anschlusseinrichtung 16' aus der Elektrolysezelle 14 beziehungsweise dem Elektrolysemodul 10 ausströmenden Fluids 18. Die Temperatur kann sich beispielsweise aufgrund einer Veränderung des ohmschen Widerstands durch (nicht gezeigten) Protonen-Austausch-Membran 22 ändern, wobei die Änderung des Widerstands auf einen Alterungsprozess des Elektrolysemoduls 10 zurückzuführen sein kann. In Abhängigkeit der gemessenen Temperatur kann nun ein Fluidstrom 50 mittels der Regelungsvorrichtung 44 geändert beziehungsweise geregelt beziehungsweise gesteuert werden. Dadurch kann Einfluss auf die Menge des durch die jeweilige Elektrolysezelle 14 beziehungsweise das Elektrolysemodul 10 durchgesetzten Wassers 24 genommen werden.

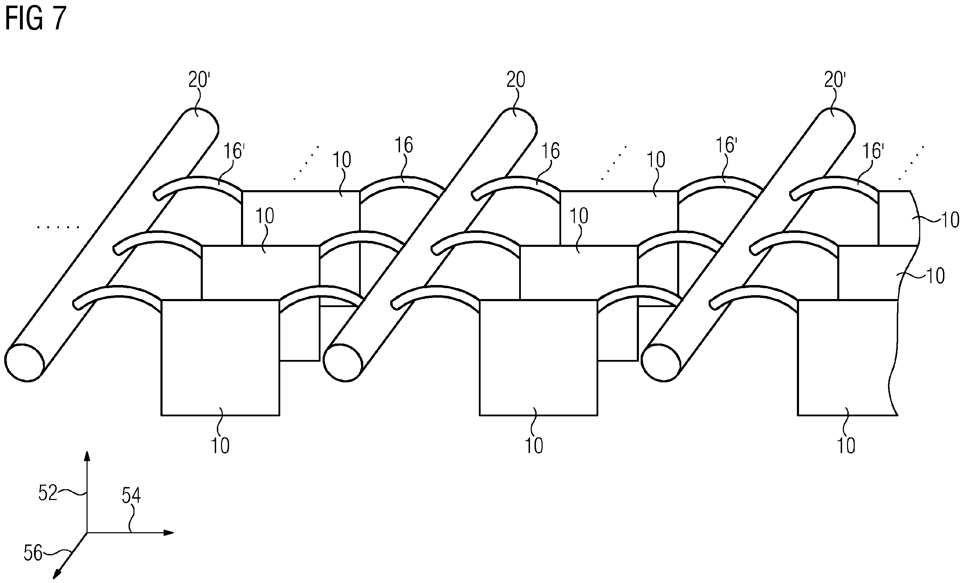

FIG 7 zeigt eine schematische Perspektivansicht einer vierten Ausführungsform der Elektrolyseanlage 12, wobei die Elektrolysemodule 10, in Bezug zur Blickrichtung in die Bildebene der FIG 7, nebeneinander und hintereinander angeordnet sind. Mit anderen Worten sind die zumindest zwei Elektrolysemodule 10 bezüglich ihrer Höhenrichtung 52 in einer dazu senkrechten ersten Richtung 54 und/oder in einer zur Höhenrichtung 52 und zur ersten Richtung 54 senkrechten zweiten Richtung 56 angeordnet. Durch diese Anordnung kann beispielsweise eine besonders große Anzahl an Elektrolysemodulen 10 an einem Kanalelement 20, 20' anordenbar sein beziehungsweise angeordnet werden. Die jeweils hintereinander entlang der zweiten Richtung 56 angeordneten Elektrolysemodule 10 bilden Reihen, wovon drei in FIG 7 gezeigt sind. Zwei der Reihen teilen sich jeweils ein Kanalelement 20, 20'. Dies ist eine Möglichkeit, wie eine Anordnung von zumindest zwei Elektrolysemodulen 10 und zumindest einem gemeinsamen Kanalelement 20, 20' besonders effizient ausgebildet sein kann, da eine Stellfläche besonders vorteilhaft mit einer besonders großen Anzahl von Elektrolysemodulen 10 befüllt werden kann. Darüber hinaus kann das gemeinsame Kanalelement 20, 20' besonders vorteilhaft die Elektrolysemodule 10 fluidisch leitend miteinander und dem (nicht gezeigten) Tank 30, 30' verbinden. Zusätzlich könnten in der Elektrolyseanlage 12 mehrere der in FIG 7 gezeigten Anordnung in Ebenen übereinander gestapelt werden, wodurch eine besonders kompakte Elektrolyseanlage 12 realisierbar ist.

## Patentansprüche

1. Elektrolyseanlage (12) zur Niederdruck-PEM-Elektrolyse, mit wenigstens zwei, jeweils zumindest eine Elektrolysezelle (14) aufweisenden Elektrolysemodulen (10), welche jeweils zumindest eine Anschlussvorrichtung (16) aufweisen, welche jeweils fluidisch leitend mit der jeweiligen zumindest einen Elektrolysezelle (14) verbunden ist und über welche das jeweilige Elektrolysemodul (10) mit einem Tank (30) zum Speichern eines Fluids (18) verbunden ist, wobei
die Anschlussvorrichtungen (16) der wenigstens zwei Elektrolysemodule (10) mit einem gemeinsamen Kanalelement (20) verbunden sind, über welches die Elektrolysemodule (10) mit dem Tank (30) verbunden sind und das Kanalelement (20) eine Neigung aufweist, mittels welcher dem Fluid (18) eine bevorzugte Flussrichtung in dem Kanalelement (20) vorgebbar ist und das Kanalelement (20) eine Entnahmevorrichtung (32) zum Ausleiten des Fluids (18) aus der Elektrolyseanlage (12) aufweist und das Kanalelement (20) eine Entlüftungsvorrichtung (34) aufweist, mittels welcher das Kanalelement (20) an seinem höchsten Punkt in Bezug zu einem Schwerkraftfeld fluidisch mit einer Umgebung (36) koppelbar ist.

2. Elektrolyseanlage (12) nach Anspruch 1, **dadurch gekennzeichnet, dass** das Kanalelement (20) mit einem einzigen Tank (30) zum Speichern des Fluids (18) verbunden ist.

3. Elektrolyseanlage (12) nach einem der vorhergehenden Ansprüche, **dadurch gekennzeichnet, dass** das Kanalelement (20) derart angeordnet ist, dass das Fluid (18) aus dem Tank (30) über das Kanalelement (20) und die zumindest eine jeweilige Anschlussvorrichtung (16) in das jeweilige Elektrolysemodul (10) förderbar ist.

4. Elektrolyseanlage (12) nach einem der vorhergehenden Ansprüche, **dadurch gekennzeichnet, dass** das Kanalelement (20) derart angeordnet ist, dass das Fluid (18) aus dem jeweiligen Elektrolysemodul (10) über die zumindest eine jeweilige Anschlussvorrichtung (16) und das Kanalelement (20) in den Tank (30) förderbar ist.

5. Elektrolyseanlage (12) nach einem der vorhergehenden Ansprüche, **dadurch gekennzeichnet, dass** die Elektrolyseanlage (12) zumindest eine Füllstandskontrollvorrichtung (38) aufweist, mittels welcher die Menge des Fluids (18) in wenigstens einer der zumindest einen Elektrolysezelle (14) zumindest eines Elektrolysemoduls (10) bestimmbar ist.

6. Elektrolyseanlage (12) nach einem der vorhergehenden Ansprüche, **dadurch gekennzeichnet, dass** die Elektrolysemodule (10) über jeweils wenigstens eine weitere Anschlusseinrichtung (16') mittels zumindest eines weiteren, gemeinsamen Kanalelements (20`) mit einem weiteren Tank (30') verbunden sind.

7. Elektrolyseanlage (12) nach Anspruch 6, **dadurch gekennzeichnet, dass** das weitere Kanalelement (20') gegenüber dem Kanalelement (20) in Bezug auf das Schwerkraftfeld in einer anderen Höhe angeordnet ist.

8. Elektrolyseanlage (12) nach einem der vorhergehenden Ansprüche, **dadurch gekennzeichnet, dass** dem Elektrolysemodul (10) eine Regelungseinrichtung (44) und der Anschlusseinrichtung (16, 16') eine Messeinrichtung (46) zugeordnet sind, wobei ein Fluidstrom des Fluids (18) durch die Anschlusseinrichtung (16, 16') mittels der Regelungseinrichtung (44) in Abhängigkeit wenigstens eines von der Messeinrichtung (46) erfassten Messwerts veränderbar ist.

9. Elektrolyseanlage (12) nach einem der vorhergehenden Ansprüche, **dadurch gekennzeichnet, dass** die zumindest zwei Elektrolysemodule (10) bezüglich ihrer Höhenrichtung (52) in einer dazu senkrechten ersten Richtung (54) und/oder in einer zur Höhenrichtung (52) und zur ersten Richtung (54) senkrechten zweiten Richtung (56) angeordnet sind.

## Claims

1. Electrolysis system (12) for low-pressure PEM electrolysis, having at least two electrolysis modules (10) each having at least one electrolysis cell (14) and each having at least one connection device (16), each of which is connected in a fluidically conductive manner to the respective at least one electrolysis cell (14) and via which the respective electrolysis module (10) is connected to a tank (30) for storing a fluid (18), wherein
the connection devices (16) of the at least two electrolysis modules (10) are connected by a common duct element (20) via which the electrolysis modules (10) are connected to the tank (30), and the duct element (20) has an inclination by means of which a preferred flow direction can be imposed on the fluid (18) in the duct element (20), and the duct element (20) has a withdrawal device (32) for discharge of the fluid (18) from the electrolysis system (12), and the duct element (20) has a venting device (34) by means of which the duct element (20) can be fluidically coupled to an environment (36) at its highest point in relation to a field of gravity.

2. Electrolysis system (12) according to Claim 1, **characterized in that** the duct element (20) is connected to a single tank (30) for storing the fluid (18).

3. Electrolysis system (12) according to either of the preceding claims, **characterized in that** the duct element (20) is arranged in such a way that the fluid (18) can be conveyed out of the tank (30) via the duct element (20) and the at least one respective connection device (16) into the respective electrolysis module (10).

4. Electrolysis system (12) according to any of the preceding claims, **characterized in that** the duct element (20) is arranged in such a way that the fluid (18) can be conveyed out of the respective electrolysis module (10) via the at least one respective connection device (16) and the duct element (20) into the tank (30).

5. Electrolysis system (12) according to any of the preceding claims, **characterized in that** the electrolysis system (12) has at least one fill level control device (38) by means of which the amount of the fluid (18) in at least one of the at least one electrolysis cell (14) of at least one electrolysis module (10) can be determined.

6. Electrolysis system (12) according to any of the preceding claims, **characterized in that** the electrolysis modules (10) are connected to a further tank (30'), in each case via at least one further connection unit (16'), by means of at least one further common duct element (20').

7. Electrolysis system (12) according to Claim 6, **characterized in that** the further duct element (20') is disposed at a different height in relation to the field of gravity relative to the duct element (20).

8. Electrolysis system (12) according to any of the preceding claims, **characterized in that** a controller unit (44) is assigned to the electrolysis module (10) and a measurement unit (46) to the connection unit (16, 16'), wherein a fluid flow rate of the fluid (18) is variable by the connection unit (16, 16') by means of the control unit (44) depending at least on a measurement value detected by the measurement unit (46).

9. Electrolysis system (12) according to any of the preceding claims, **characterized in that** the at least two electrolysis modules (10), with regard to their vertical direction (52), are disposed in a first direction (54) at right angles thereto and/or in a second direction (56) at right angles to the vertical direction (52) and to the first direction (54).

## Revendications

1. Installation ( 12 ) d'électrolyse pour l'électrolyse PEM basse pression, comprenant au moins deux modules ( 10 ) d'électrolyse, qui ont chacun au moins une cellule ( 14 ) d'électrolyse et qui ont chacun au moins un système ( 16 ) de raccordement, qui communique respectivement fluidiquement avec la au moins une cellule ( 14 ) d'électrolyse respective et par lequel le module ( 10 ) d'électrolyse respectif communique avec un réservoir ( 30 ) d'alimentation en un fluide ( 18 ), dans laquelle
les dispositifs ( 16 ) de raccordement des au moins deux modules ( 10 ) d'électrolyse communiquent avec un élément ( 20 ) commun de conduit, par lequel les modules ( 10 ) d'électrolyse communiquent avec le réservoir ( 30 ), et l'élément ( 15 ) de conduit a une inclinaison, au moyen de laquelle une direction d'écoulement préférée peut être prescrite au fluide ( 18 ) dans l'élément ( 20 ) de conduit et l'élément ( 20 ) de conduit a un système ( 32 ) de prélèvement pour retirer du fluide ( 18 ) de l'installation ( 12 ) d'électrolyse et l'élément ( 20 ) de conduit a un système ( 34 ) de désaération, au moyen duquel l'élément ( 20 ) de conduit peut, en son point le plus haut par rapport à un champ de force de pesanteur, communiquer fluidiquement avec une atmosphère ( 26 ) environnante.

2. Installation ( 12 ) d'électrolyse suivant la revendication 1, **caractérisée en ce que** l'élément ( 20 ) de conduit communique avec un réservoir ( 30 ) unique pour l'alimentation du fluide ( 18 ).

3. Installation ( 12 ) d'électrolyse suivant l'une des revendications précédentes, **caractérisée en ce que** l'élément ( 20 ) de conduit est disposé de manière à pouvoir véhiculer le fluide ( 18 ) du réservoir ( 30 ) au module ( 10 ) d'électrolyse respectif, en passant par l'élément ( 20 ) de conduit et le au moins un système ( 16 ) de raccordement respectif.

4. Installation ( 12 ) d'électrolyse suivant l'une des revendications précédentes, **caractérisée en ce que** l'élément ( 20 ) de conduit est disposé de manière à pouvoir véhiculer le fluide ( 18 ) du module ( 10 ) d'électrolyse respectif au réservoir ( 30 ), en passant par le au moins un système ( 16 ) de raccordement et l'élément ( 20 ) de conduit.

5. Installation ( 12 ) d'électrolyse suivant l'une des revendications précédentes, **caractérisée en ce que** l'installation ( 12 ) d'électrolyse a au moins un système ( 38 ) de commande de niveau, au moyen duquel la quantité du fluide ( 18 ) dans au moins l'une de la au moins une cellule ( 14 ) d'électrolyse d'au moins un module ( 10 ) d'électrolyse peut être déterminée.

6. Installation ( 12 ) d'électrolyse suivant l'une des revendications précédentes, **caractérisée en ce que** les modules ( 10 ) d'électrolyse communiquent avec un autre réservoir ( 30' ), par respectivement au moins un autre dispositif ( 16' ) de raccordement, au moyen d'au moins un autre élément ( 20' ) commun de conduit.

7. Installation ( 12 ) d'électrolyse suivant la revendication 6, **caractérisée en ce que** l'autre élément ( 20' ) de conduit est disposé, par rapport à l'élément ( 20 ) de conduit, à une hauteur autre par rapport au champ de force de pesanteur.

8. Installation ( 12 ) d'électrolyse suivant l'une des revendications précédentes, **caractérisée en ce que**, au module ( 10 ) d'électrolyse, est associé un dispositif ( 44 ) de régulation et, au dispositif ( 16, 16' ) de raccordement, un dispositif ( 46 ) de mesure, un courant du fluide ( 18 ) dans le dispositif ( 16, 16' ) de raccordement pouvant, au moyen du dispositif ( 44 ) de régulation, être modifié en fonction d'au moins une valeur de mesure relevée par le dispositif ( 46 ) de mesure.

9. Installation ( 12 ) d'électrolyse suivant l'une des revendications précédentes, **caractérisée en ce que** les au moins deux modules ( 10 ) d'électrolyse sont disposés, en ce qui concerne leur direction ( 52 ) en hauteur, dans une première direction ( 54 ), qui y est perpendiculaire, et/ou, dans une deuxième direction ( 56 ), perpendiculaire à la direction ( 52 ) en hauteur et à la première direction ( 54 ).
